# EUROPÄISCHE PATENTSCHRIFT

(11) **EP 0 996 277 B1**
(45) Veröffentlichungstag und Bekanntmachung des Hinweises auf die Patenterteilung: **11.12.2002**
(21) Anmeldenummer: 99118071.2
(22) Anmeldetag: 23.09.1999
(51) Int. Cl.: H04N 1/192, H04N 1/06

(54) **Vorrichtung zur Einstellung der Position eines zylindrischen Bildträgers in Bezug auf einen Abtastkopf**
Device for adjusting the position of a cylindrical image carrier in relation to a scanning head
Dispositif d'ajustement de la position d'un support d'image cylindrique en relation à une tête de balayage

(30) Priorität: 21.10.1998 DE 19848455
(43) Veröffentlichungstag der Anmeldung: 26.04.2000
(73) Patentinhaber: Heidelberger Druckmaschinen Aktiengesellschaft, 69115 Heidelberg (DE)
(72) Erfinder: Schmid, Gotthard, 69254 Malsch (DE)

(56) Entgegenhaltungen:
- EP-A- 0 620 670
- US-A- 4 660 094
- US-A- 5 198 636
- US-A- 5 605 097
- PATENT ABSTRACTS OF JAPAN vol. 014, no. 343 (P-1082), 25. Juli 1990 (1990-07-25) & JP 02 122211 A (SUMITOMO METAL IND LTD;OTHERS: 02), 9. Mai 1990 (1990-05-09)

## Beschreibung

Die Erfindung betrifft eine Vorrichtung zur Einstellung der Position eines zylindrischen Bildträgers in Bezug auf einen Abtastkopf.

Die Erfindung ist sowohl bei bilderzeugenden als auch bei bildwiedergebenden Geräten anwendbar, insbesondere bei der Herstellung von Druckformen und beim Abtasten von Vorlagen.

Bei der Herstellung von Druckformen innerhalb oder außerhalb von Druckmaschinen ist es bekannt, daß zu bebildernde Material, z. B. eine Druckplatte, mit einer zur Bebilderung geeigneten Oberflächenschicht auf der Mantelfläche eines Zylinders zu haltern und punktweise mit einem Werkzeug auf das zu bebildernde Material einzuwirken. Durch die Einwirkung des Werkzeuges entstehen Druckfarbe annehmende Bildpunkte. Das Werkzeug kann so ausgebildet sein, daß mehrere Bildpunkte gleichzeitig erzeugt werden. Das Werkzeug befindet sich an einer Halterung, die, um den gesamten bebilderbaren Bereich zu erfassen, in axialer Richtung des Zylinders in einer Längsführung positionierbar ist während sich der Zylinder dreht. Bei den meisten Bebilderungseinrichtungen arbeitet das Werkzeug nur in einem engen Bereich des Abstandes zwischen Werkzeug und zu bebildernden Material optimal. Deshalb ist es bekannt, den Abstand zwischen dem Werkzeug und dem Zylinder laufend auf einen gewünschten Wert zu halten. Dabei können sowohl das Werkzeug in radialer Richtung, der Zylinder als ganzes in Richtung des Werkzeuges oder beide Elemente gleichzeitig positioniert werden. Wenn als Werkzeug eine Lichtquelle, wie z. B. ein Laser, verwendet wird, dann können im Strahlengang optische Mittel zur Strahlformung, wie z. B. Autofocussysteme vorgesehen werden, die bewirken, daß trotz Form- und Lagefehlem des Zylinders und des zu bebildernden Material stets ein konstanter Einwirkbereich und eine konstante Einwirkenergie auf dem zu bebildernden Material vorhanden ist (siehe z.B. US-A-5 605 097). Auf reinen optischen Abstandsfühlern beruhende Autofocussysteme sind beim Einsatz unter rauen Umgebungsbedingungen, z. B. innerhalb einer Druckmaschine, nicht zuverlässig. Die mechanische Positionierung von Werkzeug und bebildernden Material und die optische Strahlformung können zusammen angewendet werden.

Bei der mechanischen Positionierung von Werkzeug und zu bebildernden Material können alle Freiheitsgrade genutzt werden, die sich aus dem konkreten Anwendungsfall ergeben. Z. B. ist in DD 231433 A1 eine Anordnung zur Positionierung eines Wafers in einem lithografischen Projektionssystem gezeigt, bei der das Projektionssystem fest angeordnet ist und der Wafer in zwei Richtungen verschiebar und um drei Achsen schwenkbar ist. Zur Steuerung der Positionierung werden eine Vielzahl von Weg- und Lagemeßsystemen und Stellelementen benötigt, was material- und kostenaufwendig ist.

Es ist Aufgabe der Erfindung, eine Vorrichtung zur Einstellung der Position eines zylindrischen Bildträgers in Bezug auf einen Abtastkopf zu entwickeln, die mit geringem Aufwand die Positionierung zuverlässig ermöglicht.

Die Aufgabe wird mit einer Vorrichtung gelöst, die die Merkmale nach Anspruch 1 aufweist. Die Positionierung des zylindrischen Bildträgers wird durch nur eine Schwenkbewegung erreicht, d. h. man benötigt nur ein Stellelement, das an nur einer Stelle angreift. Wenn der Bildträger dem Druckformzylinder einer Druckmaschine entspricht, dann kann als Stellelement eine bereits vorhandene Vorrichtung zum Verstellen des Diagonal- oder Schrägregisters verwendet werden. In diesem Fall sind keine gesonderten Stellelemente erforderlich.

Der im Anspruch 1 bezeichnete Abtastkopf ist Träger eines Werkzeuges für die Erzeugung, Änderung oder Löschung eines Bildes auf dem Bildträger und/oder Träger von einem Bild aufnehmenden Elementen, welches sich bereits auf dem Bildträger befindet. Der Begriff Werkzeug umfaßt alle zur Bilderzeugung geeigneten Einrichtungen, wie z. B. Umformwerkzeuge, Abtragwerkzeuge oder Einrichtungen zum Ändern der Oberflächeneigenschaften in dem zu bebildernden Material. Als Werkzeuge sind Halbleiter-Laserdioden geeignet, die gleichabständig entlang einer Mantellinie des zylindrischen Bildträgers angeordnet sein können. In diesem Fall sind die Halbleiter-Laserdioden um den einfachen Abstand der Dioden in Richtung der Achse des Bildträgers positionierbar. Als Werkzeug ist weiterhin ein einzelner über die Länge des zylindrischen Bildträgers positionierbarer Halbleiter-Laser einsetzbar, dem der Oberfläche des Bildträgers zugewandt eine Lichtventilanordnung nachgeordnet ist. Der Abtastkopf kann parallel zur Achse des ein Bild tragenden oder mit einem Bebilderungsmaterial versehenen Zylinders positionierbar sein. Es ist auch möglich, daß der Abtastkopf in einiger Entfernung vom Bildträger schwenkbar angeordnet ist, wobei die Bildaufnahmerichtung bzw. die Einwirkrichtung des Werkzeuges gegen die Oberfläche des Bildträgers geneigt liegen kann.

Vorteilhafte Ausgestaltungen der Erfindung ergeben sich aus den Unteransprüchen.

Die Erfindung soll anhand eines Ausführungsbeispieles noch näher erläutert werden, es zeigen:
- Fig. 1:: ein Schema einer Bebilderungseinheit an einer Druckmaschine, und
- Fig. 2:: ein Schema zur Steuerung der Positionierung eines Bebilderungskopfes.

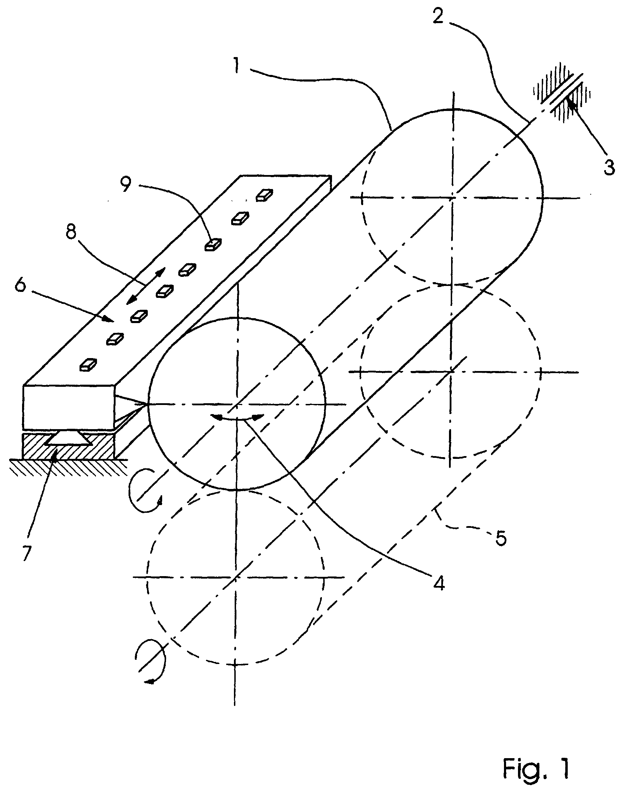

In Fig. 1 ist ein Teil eines Druckwerkes einer Offsetdruckmaschine dargestellt. Ein Druckformzylinder 1 dient als Bildträger. Der Druckformzylinder 1 kann auf seiner Oberfläche eine austauschbare Druckplatte mit einem bebilderbaren Material tragen. Bei einem plattenlosen System kann das bebilderbare Material auch direkt auf die Oberfläche des Druckformzylinders 1 aufgetragen sein oder die oberste Schicht des Druckformzylinders 1 ist die zu bebildernde Schicht. Der Druckformzylinder 1 ist beidseitig im Maschinengestell der Bogendruckmaschine gelagert. Die Welle 2 des Druckformzylinders 1 sitzt auf der einen Seite in einem ortsfesten Lager 3. Auf der anderen Seite wird der Druckformzylinder 1 in einem schwenkbaren Lager gehalten, welches nicht weiter dargestellt ist. Dieses Lager ist in einer Richtung 4 schwenkbar, die senkrecht zu einer von den Achsen des Druckformzylinders 1 und eines mit ihm in rollendem Kontakt stehenden Übertragungszylinder 5 aufgespannten Ebene liegt. Der Übertragungszylinder 5 ist vom Druckformzylinder 1 an- und abstellbar. Während der Bebilderung ist der Übertragungszylinder 5 vom Druckformzylinder 1 abgestellt. Dem Druckformzylinder 1 ist ein Bebilderungskopf 6 zugeordnet. Der Bebilderungskopf 6 ist in einer Längsführung 7 gehaltert. Die Längsführung gestattet eine Verschiebung des Bebilderungskopfes 6 in einer Richtung 8, die parallel zu den Achsen des Übertragungszylinders 5 bzw. Druckformzylinder 1 liegt. Im Bebilderungskopf sind in Richtung 8 Halbleiter-Laserdioden 9 untergebracht, die einen gleichen Abstand aufweisen. Die Halbleiterlaserdioden 9 strahlen in Richtung senkrecht zur Achse des Druckformzylinders 1. Laserlicht wird nur dann ausgesendet, wenn entsprechend einem Druckbild im Bebilderungsmaterial des Druckformzylinders 1 ein Bildpunkt erzeugt werden soll. Dazu werden die Drehbewegung des Druckformzylinders 1 und die Verschiebung des Bebilderungskopfes 6 mit den für die Bebilderung dienenden Bilddaten synchronisiert.

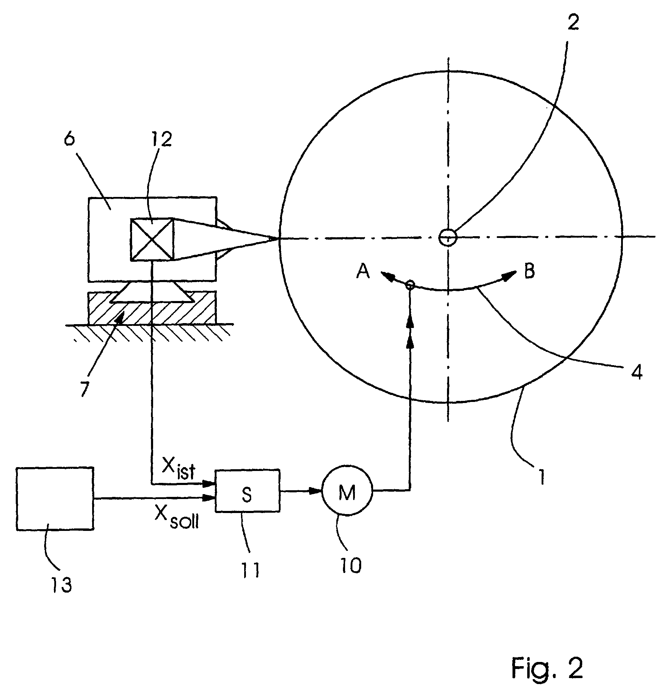

Anhand von Fig. 2 soll im folgenden näher erläutert werden, wie die Positionierung des Druckformzylinders 1 in Bezug auf den Bebilderungskopf 6 vonstatten gehen soll. Zur Realisierung der Schwenkbewegung in Richtung 4 ist an die Welle 2 des Druckformzylinders 1 eine Linearantrieb 10 gekoppelt. Dies kann derselbe Antrieb sein, der während des Druckbetriebes die Diagonal- oder Schrägregistereinstellung vornimmt. Zur Registerverstellung ist der Linearantrieb 10 in ein Registerregelsystem eingebunden. Als Linearantrieb 10 kann ein Schrittmotor oder ein Motor mit Getriebe und Drehgeber verwendet werden. Der Linearantrieb 10 steht mit einer Regelelektronik 11 in Verbindung. Mit Hilfe der Linearantriebes 10 kann der Druckformzylinder 1 an der Seite, wo der Linearantrieb 10 angreift, um +/- 1 mm aus der Ebene herausgeschwenkt werden, die im Ausgangszustand von den Rotationsachsen des Druckformzylinders 1 und des Übertragungszylinders 5 aufgespannt wird. Die Schwenkachse des Druckformzylinders 1 liegt im Lager 3. Im Bebilderungskopf 6 ist ein Geber 12 für den Abstand der Halbleiter-Laserdioden 9 von der Oberfläche des Druckformzylinders 1 integriert, dessen Signalausgang für den Istwert x_{IST} des Abstandes mit der Regelelektronik 11 verbunden ist.

Bei jeder Position des Bebilderungskopfes 6 in Richtung 8 wird der jeweils aktuelle Istwert x_{IST} mit einem Sollwert x_{SOLL} für den Abstand verglichen. Weicht der Istwert x_{IST} unzulässig von einem Sollwert x_{SOLL} ab, der in einem Sollwertspeicher 12 voreingegeben wurde, dann wird der Druckformzylinder 1 in Abhängigkeit vom Vorzeichen des Vergleichswertes (x_{SOLL}-x_{IST}) durch den Linearantrieb 10 in Richtung 4A oder B verschwenkt. Die Richtung 4 der Verschwenkung kann während einer Umdrehung der Druckformzylinders 1 wechseln, wenn am Druckformzylinder 1 Formabweichungen oder Rundlauffehler vorliegen. In jedem Fall wird gewährleistet, daß durch die Abstandsregelung die Position und die Größe eines zu erzeugenden Bildpunktes eingehalten werden.

Die Erfindung ist nicht auf die beschriebene Ausführungsform beschränkt. In einer Variante der Erfindung können die Stellelemente für eine Schwenkbewegung auch beidseitig des Druckformzylinders 1 angreifen. Dadurch kann der Positionierbereich des Druckformzylinders 1 vergrößert und die Positionierzeit verringert werden. Die Erfindung ist auch bei der Herstellung von Druckformen und beim Abtasten von Druckbildern außerhalb von Druckmaschinen verwendbar, wie z. b. bei Platten- und Filmbelichtern und bei Trommelscannern.

In einer weiteren Variante können bei Schwenkbarkeit des Druckformzylinders 1 um ein Lager 3 zwei Geber 12 für den Abstand des Bebilderungskopfes 6 von der Oberfläche des Druckformzylinders 1 vorgesehen sein, die in Richtung der Achse des Druckformzylinders jeweils im Randbereich der zu bebildernden Fläche angeordnet sind. Bei der Messung der Abstände kann während einer Umdrehung des Druckformzylinders 1 der Rundlauffehler korrigierend berücksichtigt werden. Die Positionierung des Druckformzylinders 1 kann mit dem Linearantrieb 10 so vorgenommen werden, daß beim Bebildern der Druckformzylinder 1 jeweils am Meßort der zwei Geber eine vorgegebene Sollposition einnimmt.

### Vorrichtung zur Einstellung der Position eines zylindrischen Bildträgers in Bezug auf einen Abtastkopf

### Bezugszeichenliste

- 1: Druckformzylinder
- 2: Welle
- 3: Lager
- 4: Richtung
- 5: Übertragungszylinder
- 6: Bebilderungskopf
- 7: Längsführung
- 8: Richtung
- 9: Halbleiterlaserdioden
- 10: Linearantrieb
- 11: Regelelektronik
- 12: Sollwertgeber

## Patentansprüche

1. Vorrichtung zum Einstellen der Position eines zylindrischen Bildträgers in Bezug auf einen Abtastkopf,
bei der der Bildträger um seine Längsachse rotierbar gelagert ist,
**dadurch gekennzeichnet,**
**daß** der Bildträger (1) um eine Achse schwenkbar angeordnet ist, die senkrecht zur Längsachse (2) liegt.

2. Vorrichtung nach Anspruch 1,
**dadurch gekennzeichnet,**
**daß** der Bildträger (1) auf einem Formzylinder (1) einer Druckmaschine angeordnet ist, und
**daß** der Formzylinder (1) in Seitenwänden der Druckmaschine gelagert ist, wobei mindestens eines der Lager mit einer Stelleinrichtung (10) gekoppelt ist, die den Zylinder (1) in einem der Lager (3) verschwenkt.

3. Vorrichtung nach Anspruch 2,
**dadurch gekennzeichnet,**
**daß** die Stelleinrichtung wahlweise mit einer Anordnung (11, 12, 13) zur Lageregelung des Zylinders (1) in Bezug auf den Abtastkopf (6) oder mit einer Anordnung zur Registerregelung der Druckmaschine in Verbindung steht.

4. Vorrichtung nach Anspruch 3,
**dadurch gekennzeichnet,**
**daß** die Anordnung zur Lageregelung eine Meßanordnung (12) für den Abstand (x_{IST}) zwischen Abtastkopf (6) und Formzylinder (1), einen Geber (13) für den Sollwert (x_{SOLL}) des Abstandes und eine Regelschaltung (11) enthält,
wobei der Abtastkopf (6) im wesentlichen parallel zur Rotationsachse (2) des Zylinders (1) verschiebbar ist.

5. Vorrichtung nach Anspruch 2,
**dadurch gekennzeichnet,**
**daß** zur Positionsermittlung des Bildträgers (1) in Bezug auf den Abtastkopf (6) zwei ortsfeste Geber (12) für den Abstand (x_{IST}) jeweils im Randbereich der mit dem Abtastkopf auf dem Bildträger (1) zu erfassenden Fläche vorgesehen sind.

## Claims

1. Device for adjusting the position of a cylindrical image carrier in relation to a scanning head, in which the image carrier is mounted such that it can be rotated about its longitudinal axis, **characterized in that** the image carrier (1) is arranged such that it can be pivoted about an axis which lies at right angles to the longitudinal axis (2).

2. Device according to Claim 1, **characterized in that** the image carrier (1) is arranged on a plate cylinder (1) of a printing machine, and **in that** the plate cylinder (1) is mounted inside walls of the printing machine, at least one of the bearings being coupled to an actuating device (10) which pivots the cylinder (1) in one of the bearings (3).

3. Device according to Claim 2, **characterized in that** the actuating device is optionally connected to an arrangement (11, 12, 13) for controlling the position of the cylinder (1) in relation to the scanning head (6) or to an arrangement for controlling the register of the printing machine.

4. Device according to Claim 3, **characterized in that** the arrangement for controlling the position contains a measuring arrangement (12) for the distance (x_{act}) between scanning head (6) and plate cylinder (1), a transmitter (13) for the desired value (xₛₚ) of the distance and a control circuit (11), it being possible for the scanning head (6) to be displaced substantially parallel to the axis of rotation (2) of the cylinder (1).

5. Device according to Claim 2, **characterized in that** in order to determine the position of the image carrier (1) in relation to the scanning head (6) two stationary transmitters (12) are provided for the distance (x_{act}), in each case in the edge region of the area to be registered on the image carrier (1) by the scanning head.

## Revendications

1. Dispositif pour régler la position d'un support d'image cylindrique par rapport à une tête de détection, dans lequel le support d'image est monté rotatif autour de son axe longitudinal,
**caractérisé en ce que** le support d'image (1) est agencé de manière à pouvoir pivoter autour d'un axe qui est placé perpendiculairement à l'axe longitudinal (2).

2. Dispositif selon la revendication 1, **caractérisé en ce que** le support d'image (1) est placé sur un cylindre porte-plaque ou porte-forme (1) d'une machine à imprimer, et **en ce que** le cylindre porte-plaque (1) est monté sur paliers dans les parois latérales de montant de la machine à imprimer, l'un au moins des paliers étant couplé à un dispositif de positionnement (10) qui fait pivoter le cylindre (1) dans l'un des paliers (3).

3. Dispositif selon la revendication 2, **caractérisé en ce que** le dispositif de positionnement est au choix en relation avec un agencement (11, 12, 13) de régulation de position du cylindre (1) par rapport à la tête de détection (6), ou avec un agencement de régulation de repérage de la machine à imprimer.

4. Dispositif selon la revendication 3, **caractérisé en ce que** l'agencement de régulation de position comprend un agencement de mesure (12) pour la distance d'espacement (x_{réel}) entre la tête de détection (6) et le cylindre porte-plaque (1), un élément transmetteur (13) pour fournir la valeur de consigne (x_{cons}) de la distance d'espacement, et un circuit de régulation (11), la tête de détection (6) pouvant être déplacée sensiblement de manière parallèle à l'axe de rotation (2) du cylindre (1).

5. Dispositif selon la revendication 2, **caractérisé en ce que** pour déterminer la position du support d'image (1) par rapport à la tête de détection (6), sont prévus deux capteurs (12) en position fixe pour la distance d'espacement (x_{réel}), chacun respectivement dans la zone de bordure de la surface à détecter sur le support d'image (1) avec la tête de détection.
